(19) Europäisches Patentamt / European Patent Office / Office européen des brevets

(11) **EP 3 216 167 B1**

(12) **EUROPEAN PATENT SPECIFICATION**

(45) Date of publication and mention
of the grant of the patent:
**28.08.2019 Bulletin 2019/35**

(51) Int Cl.:
**H04L 12/24** *(2006.01)*   **G06F 17/11** *(2006.01)*
**H04L 12/715** *(2013.01)*

(21) Application number: **14808548.3**

(22) Date of filing: **25.11.2014**

(86) International application number:
**PCT/EP2014/075545**

(87) International publication number:
**WO 2016/082868 (02.06.2016 Gazette 2016/22)**

(54) **ORCHESTRATOR AND METHOD FOR VIRTUAL NETWORK EMBEDDING USING OFFLINE FEEDBACK**

ORCHESTRATOR UND VERFAHREN ZUR EINBETTUNG VON VIRTUELLEN NETZWERKEN MITTELS RÜCKFÜHRUNG

ORCHESTRATEUR ET PROCÉDURE D'INCORPORATION DE RÉSEAU VIRTUEL EN UTILISANT LA RÉTROACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.09.2017 Bulletin 2017/37**

(73) Proprietor: **Huawei Technologies Co., Ltd.**
**Longgang District**
**Shenzhen, Guangdong 518129 (CN)**

(72) Inventors:
• **GUERZONI, Riccardo**
  **80992 Munich (DE)**
• **DESPOTOVIC, Zoran**
  **80992 Munich (DE)**
• **BEKER, Sergio**
  **80992 Munich (DE)**

(74) Representative: **Kreuz, Georg Maria**
**Huawei Technologies Duesseldorf GmbH**
**Riesstraße 25**
**80992 München (DE)**

(56) References cited:
• **GUERZONI R ET AL: "A novel approach to virtual networks embedding for SDN management and orchestration", 2014 IEEE NETWORK OPERATIONS AND MANAGEMENT SYMPOSIUM (NOMS), IEEE, 5 May 2014 (2014-05-05), pages 1-7, XP032608798, DOI: 10.1109/NOMS.2014.6838244 [retrieved on 2014-06-17]**
• **Lin Xu ET AL: "Hydra-MIP: Automated Algorithm Configuration and Selection for Mixed Integer Programming", Proceedings of the 18th RCRA workshop on Experimental Evaluation of Algorithms for Solving Problems with Combinatorial Explosion, 17 July 2011 (2011-07-17), XP055201920, Retrieved from the Internet: URL:http://www.cs.ubc.ca/~kevinlb/papers/2 011-HYDRA-MIP.pdf [retrieved on 2015-07-13]**
• **LIHAO XU ET AL: "Hydra: Automatically Configuring Algorithms for Portfolio-Based Selection", PROCEEDINGS OF THE 24TH AAAI CONFERENCE ON ARTIFICIAL INTELLIGENCE (AAAI-10), 11 July 2010 (2010-07-11), XP055202001,**
• **FRANK HUTTER ET AL: "ParamILS: An Automatic Algorithm Configuration Framework", JOURNAL OF ARTIFICIAL INTELLIGENCE RESEARCH, vol. 36, 1 September 2009 (2009-09-01), pages 267-306, XP055202061, ISSN: 1076-9757**

• LIN XU ET AL: "SATzilla: Portfolio-based Algorithm Selection for SAT", JOURNAL OF ARTIFICIAL INTELLIGENCE RESEARCH, vol. 32, no. 1, 1 May 2008 (2008-05-01), pages 565-606, XP055202064, DOI: 10.1613/jair.2490

• Lin Xu ET AL: "Hydra-MIP: Automated Algorithm Configuration and Selection for Mixed Integer Programming", , 4 October 2011 (2011-10-04), XP055202000, Retrieved from the Internet: URL:http://www.cs.ubc.ca/~xulin730/mypaper /MIP-Hydra-final.ppsx [retrieved on 2015-07-13]

**Description**

TECHNICAL FIELD

The invention relates to embedding virtual networks into a physical network.

BACKGROUND

When embedding a number of virtual networks into a physical network, conventionally, an input problem comprising information regarding the virtual networks, the physical networks and one or more input parameters is formulated by a user and provided to a solver unit, which calculates a possible network embedding. This solution though is not necessarily optimal. On the one hand, the quality of the embedding solution might be too low resulting in a sub-optimal network utilization of the physical network. On the other hand, the computation time might be too high. At present, it is up to the user, to specify the input problem based upon his experience for achieving unacceptable embedding quality and computation time.

Therefore, great user experience is needed while still only a sub-optimal embedding result can be achieved.

GUERZONI R ET AL: "A novel approach to virtual networks embedding for SDN management and orchestration" 2014 IEEE NETWORK OPERATIONS AND MANAGEMENT SYMPOSIUM(NOMS), IEEE, 2014-05-05, pages 1-7 presents a new Mixed Integer Programming (MIP) formulation, denoted as Edge-wise Node mapping (EdWiN), which supports larger lookahead values and allows network administrators to embed VN requests according to predefined policies. Furthermore, the flexibility of the proposed approach, in describing the structure of network substrate and VN graphs, enables many useful use cases for management and orchestrator of Software Defined Networks (SDN). A network orchestrator executes complex placement algorithm and provides a centralised solution to the embedding problem. These algorithms may be based on mathematical formulations, as long as VN requests and substrate components.

Lin Xu ET AL: "Hydra-MIP: Automated Algorithm Configuration and Selection for Mixed Integer Programming", Proceedings of the 18th RCRA workshop on Experimental Evaluation of Algorithms for Solving Problems with Combinatorial Explosion, 2011-7-17, discloses that, leveraging two key innovations, HYDRA can achieve strong performance for MIP. First, we describe a new algorithm selection approach based on classification with a non-uniform loss function, which significantly improves the performance of algorithm selection for MIT (and SAT). Second, by modifying HYDRA's method for selecting candidate configurations, it obtain better performance as a function for training time.

LIHAO XU ET AL: "Hydra: Automatically Configuring Algorithms for Portfolio-Based Selection", PROCEEDINGS OF THE 24TH AAAI CONFERENCE ON ARTIFICIAL INTELLIGENCE, 2010-07-11, discloses a novel automatically configuring algorithms for portfolio-based selection, named as Hydra. Hydra automatically builds a set of solvers with complementary strengths by iteratively configuring new algorithms. It is primarily intended for use in problem domains for which an adequate set of candidate solvers does not already exist.

LIN XU ET AL: "SATzilla: Portfolio-based Algorithm Selection for SAT", JOURNAL OF ARTIFICIAL INTELLIGENCE RESEARCH, vol. 32, no. 1, 2008-05-01, discloses methods for optimizing a target algorithm's performance on a given class of problem instances by varying a set of ordinal and/or categorical parameters. After review a family of local-search-based algorithm configuration procedures and present novel techniques for accelerating them by adaptively limiting the time spent for evaluating individual configurations. It further describe the results of a comprehensive experimental evaluation of provided method, based on the configuration of prominent complete and incomplete algorithms for SAT.

Lin Xu ET AL: "Hydra-MIP: Automated Algorithm Configuration and Selection for Mixed Integer Programming", 2011-10-04, discloses how to improve an automated approach, named as SATzilla07, by making the portfolio construction scalable and completely automated, and improving it by integrating local search solvers as candidate solvers, by predicting performance score instead of runtime, and by using hierarchical hardness models that take into account different types of SAT instances.

It further demonstrate the effectiveness of these new techniques in extensive experimental results on data sets including instances from the most recent SAT competition.

SUMMARY

Accordingly, an object of the present invention is to provide an apparatus and method, which allow for an increase in embedding quality, a decrease in computation time and at the same time require very little user experience.

The object is solved by the features of claim 1 for the apparatus and by the features of claim 14 for the method. Further it is solved by the features of claim 15 for the associated computer program. The dependent claims contain further developments.

According to a first aspect of the present invention, a virtual network embedding orchestrator for orchestrating embedding of virtual networks into a physical network is provided. The virtual network embedding orchestrator comprises a problem formulation unit, which is adapted to formulate a first embedding problem based upon information regarding the virtual networks, information regarding the physical network and at least one first input parameter. Moreover, the problem formulation unit is adapted to formulate a second embedding problem based upon the information regarding the virtual networks, the information regarding the physical network and at least one second input parameter. The problem formulation unit is furthermore adapted to provide the first embedding problem to a first external problem solving unit and to provide the second embedding problem to an external second problem solving unit. The term external here means that the problem solving units are not part of the virtual network embedding orchestrator. Moreover, the virtual network embedding orchestrator comprises a solution selection unit, which is adapted to receive first embedding results and first output parameters from the first problem solving unit and to receive second embedding results and second output parameters from the second problem solving unit. Moreover, the solution selection unit is adapted to select one of the first embedding results and the second embedding results as final embedding results based upon the first output parameters and the second output parameters. It is thereby possible to increase the embedding quality, decrease the required computation time and to reduce the required user experience.

According to a first implementation form of the virtual network orchestrator according to the first aspect, the virtual network embedding orchestrator comprises a storage unit adapted to receive and store embedding results and/or output parameters of the problem solving units and/or according embedding problems and/or according information regarding the virtual networks and/or according information regarding the physical network as past embedding cases. In this case, the problem formulation unit is adapted to determine the at least one first input parameter and the at least one second input parameter based upon the past embedding cases from the storage unit. It is thereby possible to even further increase the embedding quality and reduce the necessary computation time, since feedback information from past embedding cases can be used for defining the input embedding problems.

According to a second implementation form of the virtual network orchestrator according to the first implementation form of the first aspect, the problem formulation unit is adapted to compare the information regarding the virtual networks and the information regarding the physical network to the past embedding cases from the storage unit. To determine past embedding cases of identical or near-identical information regarding the virtual networks of identical or near-identical information regarding the physical network and of desirable output parameters, and to formulate the at least one first input parameter and the at least one second input parameter based upon at least one first input parameter and at least one second input parameter of the past embedding cases of identical or near-identical information regarding the virtual networks and of identical or near-identical information regarding the physical network. An even greater increase in embedding quality and decrease of computation time can thereby be achieved.

According to a third implementation form of the virtual network orchestrator according to the second implementation form of the first aspect, the problem formulation unit is adapted to formulate the at least one first input parameter and the at least one second input parameter by interpolating between the first input parameters and the second input parameters of at least two past embedding cases of identical or near-identical information regarding the virtual networks and of identical or near-identical information regarding the physical network or by selecting the at least one first input parameter and the at least one second input parameter of a single past embedding case of most identical or near-identical information regarding the virtual networks and of most identical or near-identical information regarding the physical network. A further increase of embedding quality and decrease of required computational time can thereby be reached.

According to a fourth implementation form of the virtual network orchestrator according to the first implementation form, the second implementation form or the third implementation form of the first aspect, the output parameters of the problem solving units comprise at least one problem solving quality parameter and/or a problem solving time duration parameter. Especially by using these types of output parameters and optimization regarding an increased problem solving quality and at the same time a reduced computational time is possible.

According to a fifth implementation form of the virtual network orchestrator according to the fourth implementation form of first aspect, the problem formulation unit is adapted to formulate the at least one first input parameter and the at least one second input parameter by interpolating between the first input parameters and the second input parameters of at least two past embedding cases of identical or near-identical information regarding the virtual networks and of identical or near-identical information regarding the physical network and of desirable output parameters, or by selecting the at least first input parameter and the at least one second input parameter of a single past embedding case of most identical or near-identical information regarding the virtual networks and of most identical or near-identical information regarding the physical network and of most desirable output parameters. In this case, desirable output parameters comprise a problem solving quality parameter above a quality threshold and a problem solving time duration parameter below a time duration threshold. A further increase in embedding quality and decrease in time consumption can thereby be achieved.

According to a sixth implementation form of the virtual network orchestrator according to the fifth implementation form of the first aspect, the at least one problem solving quality parameter comprises an average number of links of the physical network used for the links of the virtual networks, and/or a fraction of utilization of the links and nodes of the physical network and/or an amount of virtual networks embedded into the physical network. Thereby, a further increase in embedding quality and decrease in time consumption is achieved.

According to a seventh implementation form of the virtual network orchestrator according to the first aspect or any previously described implementation forms of the first aspect, the information regarding the physical network comprises information regarding physical nodes and physical links connecting the nodes. Additionally or alternatively, the information regarding the virtual network each comprises information regarding at least one virtual link connecting at least two virtual nodes. Additionally or alternatively, the first embedding results, the second embedding results and the final embedding results comprise a mapping of the physical links of the physical network to the virtual links of the virtual networks and/or a mapping of the physical nodes of the physical network to the virtual nodes of the virtual networks. A very accurate embedding is thereby achieved.

According to an eighth implementation form of the virtual network orchestrator according to the first aspect or any previously described implementation forms of the first aspect, the at least one first input parameter and the at least one second input parameter of the problem formulation unit comprise an amount of virtual networks for which the embedding into the physical network is to be calculated simultaneously. An even greater decrease of time consumption is thereby achieved.

According to a ninth implementation form of the virtual network orchestrator according to the first aspect or any previously described implementation forms of the first aspect, the at least one first input parameter and the at least one second input parameter of the problem formulation unit comprise a weighting parameter for weighting costs against benefits of a solution of the problem solving unit. A further increase in embedding quality and decrease in time consumption is thereby achieved.

According to a tenth implementation form of the virtual network orchestrator according to the first aspect or any previously described implementation forms of the first aspect, the virtual network embedding orchestrator further comprises an input buffer adapted to successively receive and store the information regarding the virtual networks. In this case, the problem formulation unit is adapted to formulate the embedding problems based upon information regarding the virtual networks stored in the input buffer. A very low hardware effort can thereby be achieved.

A second aspect of the present invention provides a virtual network embedding system comprising a before-described virtual network embedding orchestrator and at least a first problem solving unit and a second problem solving unit. The problem formulation unit of the virtual network embedding orchestrator is then adapted to provide the first embedding problem to the first problem solving unit and to provide the second embedding problem to the second problem solving unit.

According to a third aspect of the present invention, a virtual network system is provided. The virtual network system comprises a before-described virtual network embedding system and a physical network and at least a first virtual network and a second virtual network.

According to a fourth aspect of the present invention, a method for orchestrating embedding of virtual networks into a physical network is provided. The method comprises formulating a first embedding problem based upon information regarding the virtual networks, information regarding the physical network and at least one first input parameter, formulating a second embedding problem based upon the information regarding the virtual networks, the information regarding the physical network and at least one second input parameter. The method further comprises providing the first embedding problem to a first problem solving unit and providing the second embedding problem to a second problem solving unit. Moreover, the method comprises receiving first embedding results and first output parameters from the first problem solving unit and receiving second embedding results and second output parameters from the second problem solving unit. Finally, the method comprises selecting one of the first embedding results and the second embedding results as final embedding results based upon the first output parameters and the second output parameters. It is thereby possible to increase the embedding quality, decrease the required computation time and to reduce the required user experience.

According to a first implementation form of the method for orchestrating according to the fourth aspect, the embedding results and/or output parameters of the problem solving units and/or according embedding problems and/or according information regarding the virtual networks and/or according information regarding the physical network are stored as past embedding cases. The at least one first input parameter and the at least one second input parameter are determined based upon stored past embedding cases. It is thereby possible to even further increase the embedding quality and reduce the necessary computation time, since feedback information from past embedding cases can be used for defining the input embedding problems.

According to a second implementation form of the method for orchestrating according to the first implementation form of the fourth aspect, the information regarding the virtual networks and the information regarding the physical network are compared to the stored past embedding cases. Past embedding cases of identical or near-identical information regarding the virtual networks or of identical or near-identical information regarding the physical network and of desirable output parameters are determined. The at least one first input parameter and the at least one second input parameter are formulated based upon the at least one first input parameter and the at least one second input parameter of the past embedding cases of identical or near-identical information regarding the virtual networks and of identical or near-identical information regarding the physical network. An even greater increase in embedding quality and decrease of computation time can thereby be achieved.

According to a third implementation form of the method for orchestrating according to the second implementation form of the fourth aspect, the at least one first input parameter and the at least one second input parameter are formulated by interpolating between the first input parameters and second input parameters of at least two past embedding cases of identical or near-identical information regarding the virtual networks and of identical or near-identical information regarding the physical network or by selecting the at least one first input parameter and the at least one second input parameter of a single past embedding case of most identical or near-identical information regarding the virtual networks and of most identical or near-identical information regarding the physical network. A further increase of embedding quality and decrease of required computational time can thereby be reached.

According to a fourth implementation form of the method for orchestrating according to the first implementation form, the second implementation form or the third implementation form of the fourth aspect, the output parameters of problem solving comprise at least one problem solving quality parameter and/or a problem solving time duration parameter. Especially by using these types of output parameters and optimization regarding an increased problem solving quality and at the same time a reduced computational time is possible.

According to a fifth implementation form of the method for orchestrating according to the fourth implementation form of the fourth aspect, the at least one first input parameter and the at least one second input parameter are formulated by interpolating between the first input parameters and the second input parameters of at least two past embedding cases of identical or near-identical information regarding the virtual networks and of identical or near-identical information regarding the physical network and of desirable output parameters, or by selecting the at least one first input parameter and the at least one second input parameter of a single past embedding case of most identical or near-identical information regarding the virtual networks and of most identical or near-identical information regarding the physical network and of most desirable output parameters. In this case, desirable output parameters comprise a problem solving quality parameter above a quality threshold and/or a problem solving time duration parameter below a time duration threshold. A further increase in embedding quality and decrease in time consumption can thereby be achieved.

According to a sixth implementation form of the method for orchestrating according to the fifth implementation form of the fourth aspect, the at least one problem solving quality parameter comprises an average number of links of the physical network used for the links of the virtual networks, and/or a fraction of utilization of the links and nodes of the physical network, and/or an amount of virtual networks embedded into the physical network. Thereby, a further increase in embedding quality and decrease in time consumption is achieved.

According to a seventh implementation form of the method for orchestrating according to the fourth aspect or any previously described implementation forms of the fourth aspect, the information regarding the physical network comprises information regarding physical nodes and physical links connecting the nodes. Additionally or alternatively, the information regarding the virtual networks each comprises information regarding at least one virtual link connecting at least two virtual nodes. Additionally or alternatively, the first embedding results, the second embedding results and the final embedding results comprise a mapping of the physical links of the physical network to the virtual links of the virtual networks and/or a mapping of the physical nodes of the physical network to the virtual nodes of the virtual networks. A very accurate embedding is thereby achieved.

According to an eighth implementation form of the method for orchestrating according to the fourth aspect or any previously described implementation forms of the fourth aspect, the at least one first input parameter and the at least one second input parameter comprise an amount of virtual networks for which the embedding into the physical network is to be calculated simultaneously. An even greater decrease of time consumption is thereby achieved.

According to a ninth implementation form of the method for orchestrating according to the fourth aspect or any previously described implementation forms of the fourth aspect, the at least one first input parameter and the at least one second input parameter comprise a weighting parameter for weighting costs against benefits of a solution of the problem solving. A further increase in embedding quality and decrease in time consumption is thereby achieved.

According to a tenth implementation form of the method for orchestrating according to the fourth aspect or any previously described implementation forms of the fourth aspect, the information regarding the virtual networks is successively received and stored. When formulating the embedding problems, the information regarding the virtual networks previously stored, is used. A very low hardware effort can thereby be achieved.

Moreover, a fifth aspect of the present invention is provided. The fifth aspect provides a computer program with a program code for performing the before-described method when the computer program runs on a computer.

Generally, it has to be noted that all arrangements, devices, elements, units and means and so forth described in the present application could be implemented by software or hardware elements or any kind of combination thereof. Furthermore, the devices may be processors or may comprise processors, wherein the functions of the elements, units and means described in the present applications may be implemented in one or more processors. All steps which are performed by the various entities described in the present application as well as the functionality described to be performed by the various entities are intended to mean that the respective entity is adapted to or configured to perform the respective steps and functionalities. Even if in the following description or specific embodiments, a specific functionality or step to be performed by a general entity is not reflected in the description of a specific detailed element of that entity which performs that specific step or functionality, it should be clear for a skilled person that these methods and functionalities can be implemented in respect of software or hardware elements, or any kind of combination thereof.

BRIEF DESCRIPTION OF DRAWINGS

The present invention is in the following explained in detail in relation to embodiments of the invention in reference to the enclosed drawings, in which

Fig. 1    shows a first embodiment of the virtual network embedding orchestrator;
Fig. 2    shows virtual networks, a physical network and a possible virtual network embedding;
Fig. 3    shows an example of a virtual network embedding solution;
Fig. 4    shows a second embodiment of the virtual network embedding orchestrator;
Fig. 5    shows a third embodiment of the virtual network embedding orchestrator;
Fig. 6    shows a fourth embodiment of the virtual network embedding orchestrator;
Fig. 7    shows a fifth embodiment of the virtual network embedding orchestrator;
Fig. 8    shows an exemplary virtual network and an exemplary physical network;
Fig. 9    shows an exemplary embedding of a virtual network into a physical network;
Fig. 10   shows a quality/time diagram of an exemplary virtual network embedding; and
Fig. 11   shows an embodiment of the method for orchestrating embedding of virtual networks into a physical network.

DESCRIPTION OF EMBODIMENTS

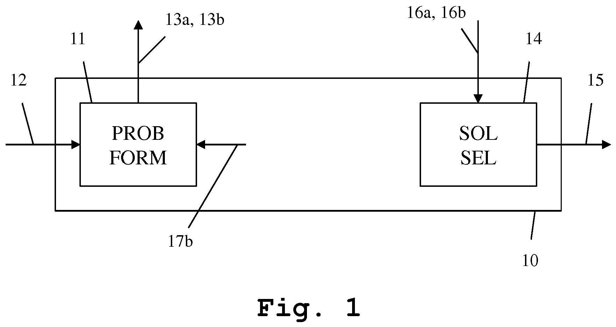

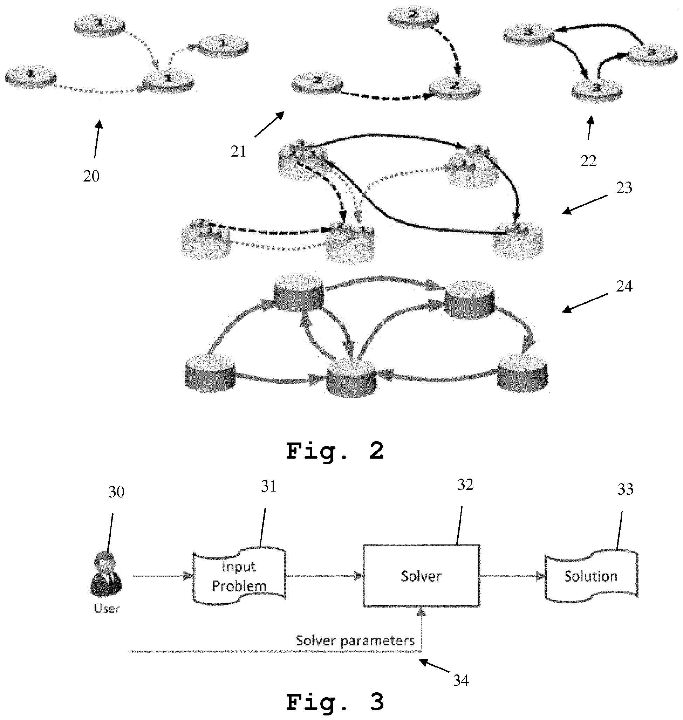

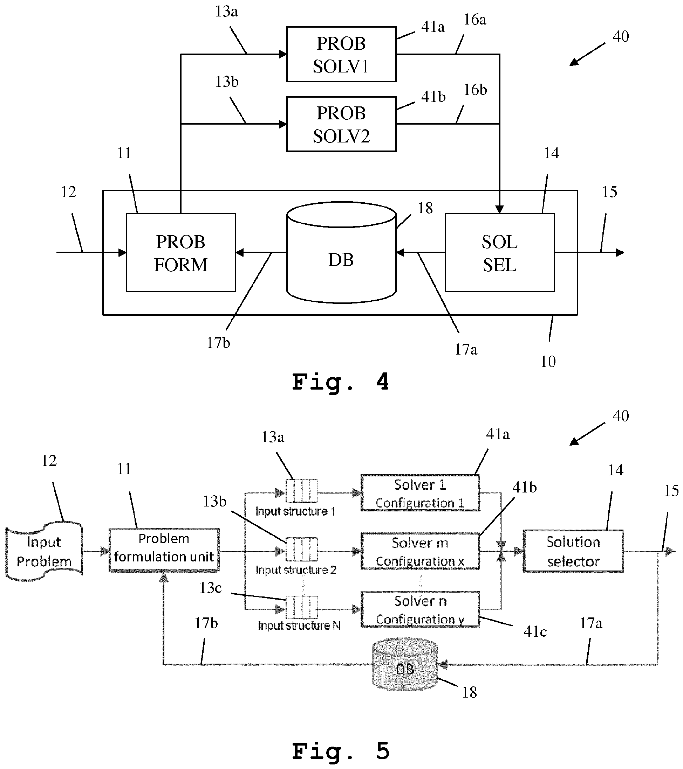

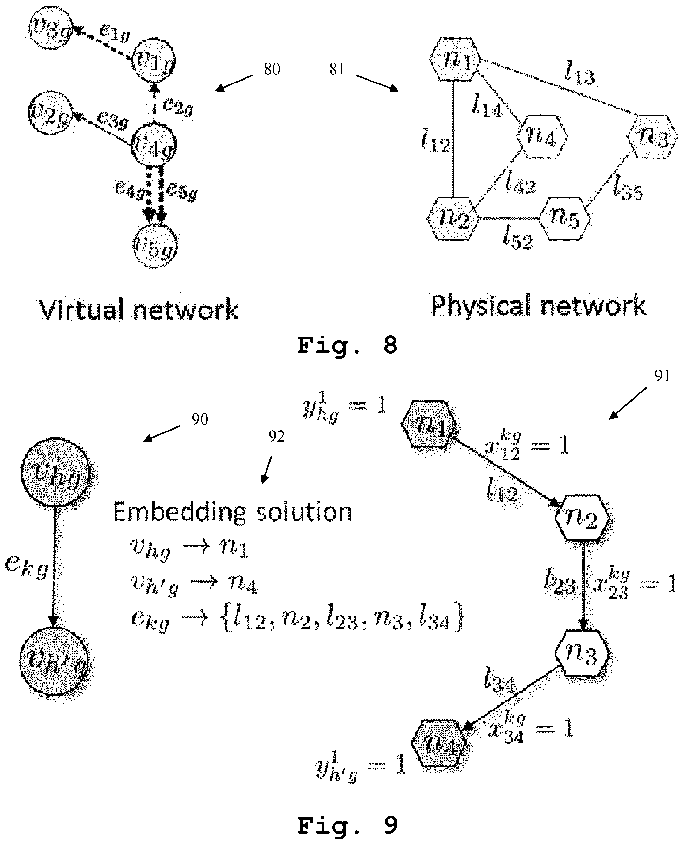

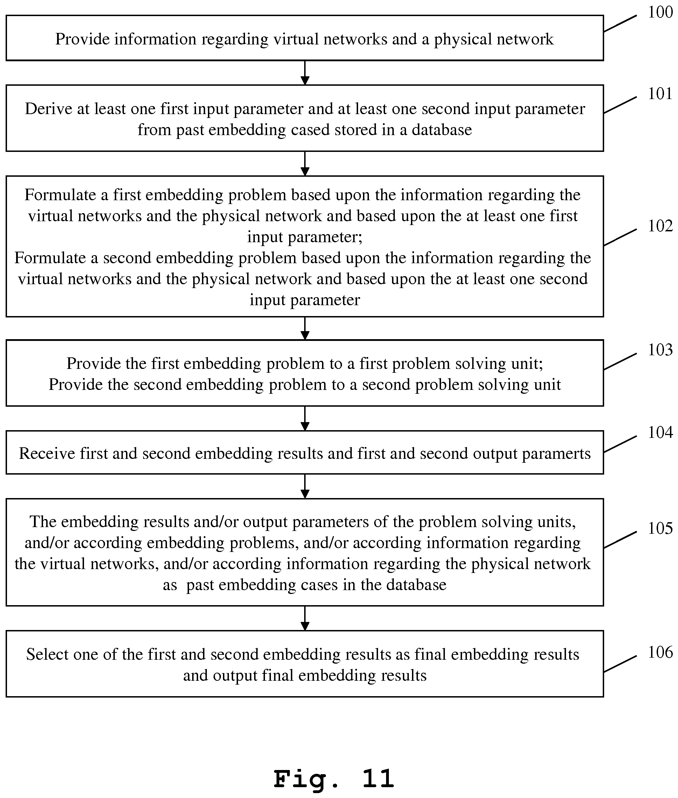

First, we demonstrate the construction and function of a first embodiment of the virtual network embedding orchestrator along Fig. 1. Along Fig. 2 and Fig. 3, the underlying problem and an exemplary solution is shown. Along Fig. 4 - Fig. 7, further embodiments of the virtual network embedding orchestrator are described. With use of Fig. 8 - Fig. 10 an exemplary embedding of a virtual network into a physical network is described in detail. Finally, with use of Fig. 11, the function of an embodiment of the method for orchestrating the embedding of virtual networks into a physical network is described. Similar entities and reference numbers in different figures have been partially omitted.

In Fig. 1, a first embodiment of the virtual network embedding orchestrator 10 is depicted. The virtual network embedding orchestrator 10 comprises a problem formulation unit 11 and a solution selection unit 14. The problem formulation unit 11 formulates a first embedding problem 13a based upon information regarding virtual networks to be embedded, information regarding a physical network, the virtual networks are to be embedded into 12 and based upon at least one first input parameter 17b. Moreover, the problem formulation unit 11 formulates a second embedding problem 13b based upon the information regarding the virtual networks, the information regarding the physical network 12 and at least one second input parameter 17b. The first embedding problem 13a is provided to an external first problem solving unit. The second embedding problem 13b is provided to an external second problem solving unit. The external problem solving units are not depicted in Fig. 1.

The solution selection unit 16 receives first embedding results and first output parameters 16a from the first problem solving unit and receives second embedding results and second output parameters 16b from the second problem solving unit. The solution selection unit 14 selects one of the first embedding results 16a and the second embedding results 16b as final embedding results 15 based upon the first output parameters 16a and the second output parameters 16b.

When embedding virtual networks one aims at mapping multiple virtual networks 20, 21, 22 onto a physical network 24, as illustrated in Fig. 2. A possible embedding 23 is also depicted here.

A physical network 24 advantageously is an undirected graph of nodes and links representing the resources offered by a physical infrastructure. For example, in a physical network representing interconnected hosts, a physical node can be a host with certain computing power, memory and storage space available, while each physical link might have bandwidth and delay as the two relevant properties.

A virtual network 20, 21, 22 is advantageously a directed graph of virtual nodes and links representing the resource requirements of an application that must be implemented in the physical infrastructure. These requirements are seen as constraints that should be fully satisfied when mapping a required virtual network 20, 21, 22 onto the physical network 24. For example, if the requirement for a virtual link is to provide 10Mbps bandwidth, it is not allowed to provide a bandwidth less than 10Mbps by, for example, allocating only 1Mbps bandwidth physical link.

The challenge in virtual network embedding is to allocate resources to as many as possible of these virtual networks 20, 21, 22 while staying within the physical limits, as specified in the physical network 24. Generally speaking, among all possible assignments of virtual links and virtual nodes across all virtual networks 20, 21, 22 to the physical links and physical nodes of the physical network 24, we strive to find one that optimizes a suitably selected goal function. However, this problem is NP-hard. So we cannot rely on an exhaustive search or expect to find a polynomial time algorithm to solve it.

In order to perform such a network embedding, solvers are typically used to determine possible solutions of mixed integer programming (MIP) model instances. The performance of the solver, in terms of convergence to a solution and quality of the solution, depends on (i) the structure of the input problem and (ii) the configuration parameters of the solver. In the following the terms solver, MIP solver and problem solving unit are used interchangeably. Also, the terms problem, embedding problem and MIP embedding problem are also used interchangeably.

Fig. 3 shows the typical use of a MIP solver 32, which corresponds to the earlier mentioned problem solving unit, to determine a solution for an MIP embedding problem 31 provided by a user 30. The MIP embedding problem 31 is described by a set of constraints and a cost function to be maximized. The problem 31 is described using the syntax of the MIP solver 32. The solution delivered by the solver 32 is also influenced by parameter settings 34 of the solver 32, for instance, timeout, MIP gap, solving method, etc.

In order to perform such a problem solving, a great deal of experience of the user 30 is required to define the input problem 31 and to set the solver parameters 34. By use of the virtual network embedding orchestrator 10, this is no longer necessary.

In Fig. 4, a second embodiment of the virtual network embedding orchestrator 10 is shown. The virtual network embedding orchestrator 10 here additionally comprises a storage unit 18, in this example a database.

Moreover, in Fig. 4, additionally the first problem solving unit 41a and the second problem solving unit 41b are depicted. They do not belong to the virtual network embedding orchestrator 10, but form a virtual network embedding system 40 in conjunction with the virtual network embedding orchestrator 10. The problem solving units 41a, 41b are provided with embedding problems 13a, 13b formulated by the problem formulation unit 11 and additionally with the information regarding the virtual networks 12 and the information regarding the physical network 12. The provision of the information regarding the virtual networks and the information regarding the physical network 12though is not depicted here.

In the embodiment depicted here, the storage unit 18 receives and stores past embedding cases 17a, which comprise embedding results and/or output parameters of the problem solving units and/or according embedding problems and/or according information regarding the virtual networks and/or according information regarding the physical network. The problem formulation unit 11 determines the at least one first input parameter 13a and the at least one second input parameter 13b based upon past embedding cases 17b from the storage unit 18.

When determining the at least one first input parameter 13a and the at least one second input parameter 13b, the problem formulation unit 11 compares the information regarding the virtual networks and the information regarding the physical network to the past embedding cases 17b from the storage unit 18. Past embedding cases are determined which are of identical or near-identical information regarding the virtual networks and of identical or near-identical information regarding the physical network and of desirable output parameters. The at least one first input parameter and the at least one second input parameter are formulated based upon at least one first input parameter and at least one second input parameter of the past embedding cases of identical or near-identical information regarding the virtual networks and the physical network.

Especially when determining the at least one first input parameter and the at least one second input parameter, the problem formulation unit 11 can interpolate between more than one past embedding case 17b from the storage unit 18. In this case, past embedding cases 17b, which closely resemble the present embedding case, are selected. An interpolation between the input parameters of these past embedding cases is performed. This interpolation can be a simple average of the past input parameters. Alternatively, also an average weighted by the respective proximity of the present embedding case can be used. Alternatively, the input parameters of a single most closely resembling past embedding case 17b can be directly selected as first input parameter 13a and second input parameter 13b.

The output parameters 16a, 16b of the problem solving units 41a, 41b comprise at least one problem solving quality parameter and/or a problem solving time duration parameter.

The at least one problem solving quality parameter comprises an average number of links of the physical network used for the links of the virtual networks and/or a fraction of utilization of the links and nodes of the physical network and/or an amount of virtual networks embedded into the physical network.

The information regarding the physical network comprises information regarding nodes and physical links connecting the nodes. The information regarding the virtual networks each comprises information regarding at least one virtual link connecting at least two of the nodes. The first embedding result 16a, the second embedding result 16b and the final embedding result 15 comprise a mapping of the physical links of the physical network to the virtual links of the virtual networks and/or a mapping of the physical nodes of the physical network to the virtual nodes of the virtual networks. The at least one first input parameter and the at least one second input parameter are each an amount of virtual networks for which the embedding into the physical network is to be calculated simultaneously. Alternatively or additionally, the at least one first input parameter and the at least one second input parameter each are a weighting parameter for weighting costs against benefits of a solution of the problem solving by the problem solving units 41a, 41b.

The problem solving units 41a, 41b determine the solutions to the embedding problems - the embedding results 16a, 16b by integer programming or mixed integer programming.

In Fig. 5 a further embodiment of the virtual network embedding orchestrator 10 is depicted. Also here, problem solving units 41a, 41b and 41c are shown. The problem formulation unit 11 here formulates three different embedding problems 13a, 13b and 13c, which are each supplied to one of the problem solving units 41a, 41b and 41c. Apart from this difference, the setup is completely identical to the setup of Fig. 4.

Each solver branch including one of the problem solving units 41a, 41b, 41c may or may not involve:

- Different solver brands

- Same solver with different solver configurations

The problem formulation unit 11 receives as input a sequence of virtual networks and a physical network 12. After receiving a number Q of virtual networks, the Orchestrator builds different embedding problem structures using the model parameters and submits each problem structure to a different solver branch.

The solution selector 14, which corresponds to the previously described solution unit 14 receives the solutions from each branch and selects the best solution according to the selection criteria. Example of selection criteria are:

- The best quality solution (e.g according to the value of the goal function OR the percentage of embedded virtual networks OR the average number of physical links involved in the solution) received before the expiration of a timeout;
- The best quality solution (as above) without time constraints;
- The fastest solution.

The Solution selector 14 populates the database 18 with the description of inputs and the solution, in order to support future decisions of the Orchestrator.

The solution aims at:

1. Using different structures of the solver input; the input structure can differ by input problem size (number of problem instances submitted to the solver) or by specific parameters characterizing the input structure (e.g. goal function parameters). The input structures are determined by a problem formulation unit 11 based on the knowledge of past performance stored in a database 18.

2. Using multiple solvers 41a, 41b, 41c with their corresponding configurations: we do not know in advance how these structures will perform. That is why we select several of those structures most likely to perform well according to the history stored in the database 18.

3. Selecting at run time the best solution based on solution quality, e.g. maximized embedding rate or minimized physical network resource utilization, and convergence time criteria. The run time selection is performed by the Solution Selector 14.

There is no need to combine solutions of individual solvers 41a, 41b, 41c. Each solver 41a, 41b, 41c solves a modified version of the original problem.

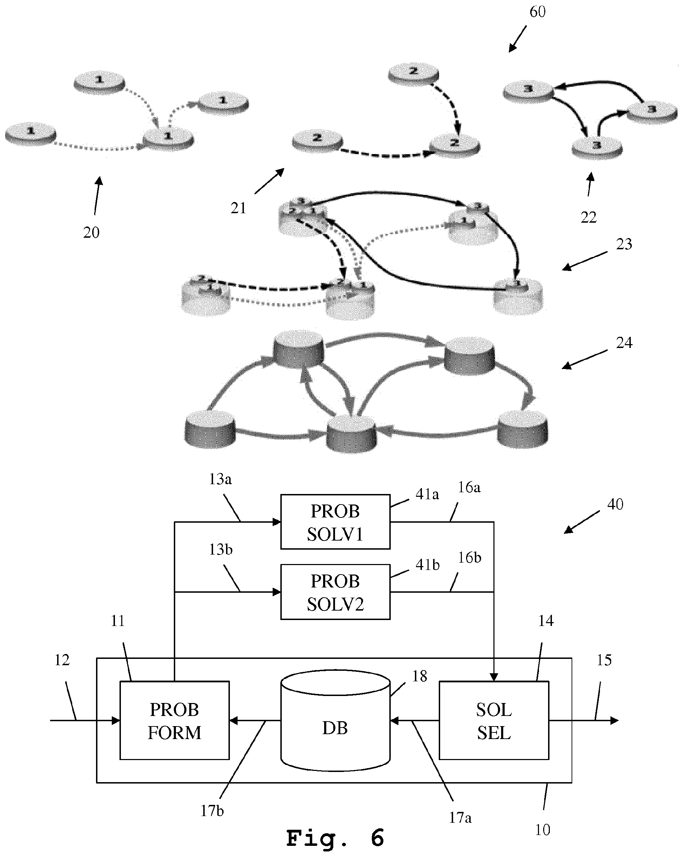

Moreover, in Fig. 6, a further embodiment of the virtual network embedding orchestrator is shown. Here, additionally virtual networks 20 - 22, a physical network 24 and a possible embedding result 23 are shown. The virtual network embedding orchestrator 10, the problem solving units 41a, 41b, the virtual networks 20 - 22 and the physical network 24 form a virtual network system 60. The function of the virtual network embedding system 40 comprised by the virtual network embedding orchestrator 10 and the problem solving units 41a and 41b is identical to the virtual network embedding system 40 of Fig. 5.

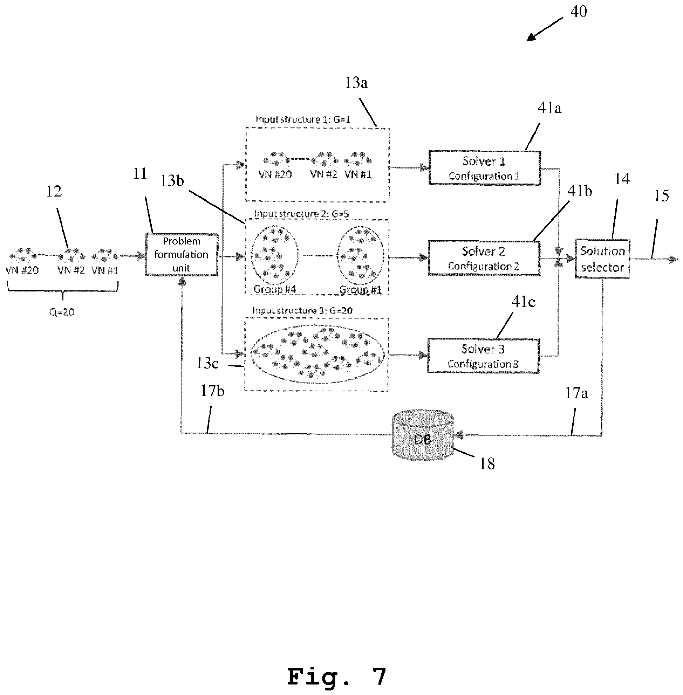

In Fig. 7, a further embodiment of the virtual network embedding orchestrator is shown. Again here, a virtual network embedding system 40 comprising three problem solving units 41a, 41b and 41c is depicted. In the example shown here, further detail regarding the information regarding the virtual networks, information regarding the physical network 12 and regarding the embedding problems 13a, 13b and 13c is shown. Especially here it is shown that the first embedding problem 13a groups the virtual networks separately. Therefore, only one individual virtual network is embedded simultaneously into the physical network. In the second embedding problem 13b, the total number of 20 virtual networks is grouped into four groups of five virtual networks each. Therefore, five virtual networks are simultaneously embedded into the physical network. The third embedding problem 13c groups all virtual networks together into one single embedding group resulting in 20 virtual networks being embedded into the physical network simultaneously.

The problem formulation unit 11 receives in input a sequence 12 of virtual networks and a physical network, which corresponds to the information regarding the of virtual networks and the physical network 12. After receiving a number Q of virtual networks, the problem formulation unit 11 builds different embedding problem structures 13a, 13b, 13c, corresponding to the earlier described embedding problems, using the parameters G introduced previously, and submits each problem structure to a different solver branch including one problem solving unit 41a, 41b, 41c, each.

For instance, the Orchestrator collects Q=20 virtual networks and submit them:

- To the solving branch 1 including the problem solving unit 41a sequentially one by one (G=1);
- To the solving branch 2 including the problem solving unit 41b sequentially in groups of 5 (G=5);
- To the solving branch 3 including the problem solving unit 41c in a single group of 20 (G=20).

The solution selection unit 14 receives the solutions from each branch and selects the best solution according to the selection criteria. Example of selection criteria are:

- The best quality solution (e.g according to the value of the goal function OR the percentage of embedded virtual networks OR the average number of physical links involved in the solution) received before the expiration of a timeout;
- The best quality solution (as above) without time constraints;
- The fastest solution.

The Solution selection unit 14 populates the database 18 with the description of inputs and the respective solutions, to support future decisions of the problem formulation unit 11. An example of database fields is shown in the following table:

| | Characteristics of the input | | Characteristics of the solution | |
|---|---|---|---|---|
| Solver | Problem size | Virtual network size | Convergence time | Solution quality |
| GLPK | G=1 | 10 nodes, 50 links | 100 ms | 90% |
| GLPK | G=5 | 10 nodes, 50 links | 1200 ms | 92% |
| GLPK | G=20 | 10 nodes, 50 links | 13500 ms | 93% |
| LPSolve | G=1 | 10 nodes, 50 links | 150 ms | 91% |
| LPSolve | G=5 | 10 nodes, 50 links | 2200 ms | 92% |

In Fig. 8, a virtual network 80 which is to be implemented into a physical network 81 is shown. The virtual network 80 comprises a number of nodes v3g, v1g, v2g, v4g, v5g and a number of links e1g, e2g, e3g, e4g, e5g.

The physical network 81 comprises a number of nodes n1, n2, n3, n4 and n5 and a number of links 112, 114, 142, 152, 113, 135.

The embedding problem is characterized by:

- Input: one physical network 80 and many virtual network (VN) requests corresponding to a number of virtual networks 80, given in the form of graphs, and

- Output: assign virtual networks 80 to the physical network 81 resources so as to maximize a goal function while fulfilling operational requirements and staying within available capacities of the physical network 81.

The virtual networks 80 are described in the form of directed graphs $G_g^V = (V_g^V, E_g^V)$, where:

- g=1...G and G is the number of Virtual networks simultaneously embedded;
- $V_g^V$ is a set of $H_g$ virtual nodes $v_{hg}$ with h=1...$H_g$, each one characterized by node capacity requirements;
- $E_g^V$ is a set of $K_g$ virtual links $e_{kg}$ with k=1...$K_g$, each one characterized by link capacity requirements.

The physical network 81 is described in the form of undirected graphs $G^P = (V^P, E^P)$, where:

- $V^P$ is a set of N physical nodes $n_i$ with i=1...N, each one characterized by available node capacity;
- $E^P$ is a set of virtual links $l_{ij}$ with i,j=1...N, each one characterized by available link capacity.

The embedding model is characterized by the following variables:

- Virtual node embedding variables $y^i_{hg}$, Boolean variables equal to 1 if and only if the virtual node $v_{hg}$ is embedded in the physical node $n_i$;
- Virtual link embedding variables $x^{kg}_{ij}$, Boolean variables equal to 1 if and only if the virtual link $e_{kg}$ is embedded in the physical node $l_{ij}$;
- Virtual graph embedding variables $y_g$, Boolean variables equal to 1 if and only if the virtual graph $G_g^V$ is fully embedded in $G^P$. The graph is fully embedded when all the virtual nodes and links belonging to the graph are embedded.

In Fig. 9, a virtual network 90 and an according embedding solution 92 into a physical network 91 is depicted. Here, an embedding solution 92 for two virtual nodes $v_{hg}$, $v_{h'g}$ and one virtual link $e_{kg}$ is shown.

Finally the embedding problem is characterized by a goal function to be maximized. An example of goal function is:

$$max \left\{ \sum_{g=1}^{G} \left[ wy_g - \sum_{k=1}^{K_g} \sum_{i=1}^{N} \sum_{j=1}^{N} x^{kg}_{ij} \right] \right\}$$

This function is meant to maximize the number of embedded virtual networks, i.e. the summation of $y_g$, while minimizing the number of physical links involved in the solution, i.e. the summation of $x^{kg}_{ij}$.

The parameter w tunes the balance between revenues (the summation of $y_g$) and costs (the summation of $x^{kg}_{ij}$). The parameter w corresponds to the earlier-described weighting parameter.

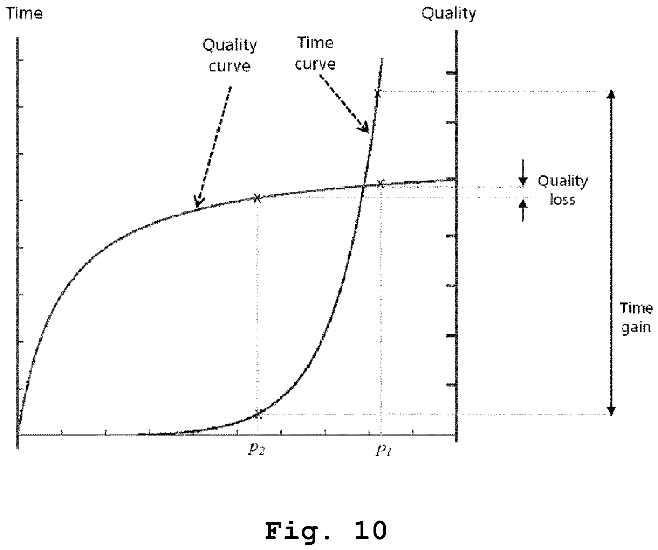

In Fig. 10, a time/quality diagram of an embedding process is shown.

The embedding model described in the previous section involves two parameters:

- G: the number of virtual networks simultaneously submitted in input;

- w: the tuning parameter in the goal function.

When resolving the embedding problem by means of a MIP solver, which corresponds to the problem solving units described earlier, these parameters affect:

- The quality of the solution: for instance, the value of the goal function OR the percentage of embedded VN requests OR the average number of physical links involved in the solution;
- The convergence time: the time spent by the MIP solver to provide an embedding solution.

Fig. 10 shows, for a typical quality/time diagram, that an important gain in convergence time can be attained by a small loss of solution quality.

Finally, in Fig. 11, an embodiment of the method for orchestrating the embedding of virtual networks into a physical network is shown in a flow diagram. In a first step 100, information regarding virtual networks and a physical network is provided. In a second step 101, at least one first input parameter and at least one second input parameter are derived from past embedding cases stored in a data base. The past embedding cases comprise information regarding the virtual and physical network of past embedding calculations and/or according input parameters and/or according embedding results and/or according output parameters.

In a third step 102, a first embedding problem is formulated based upon the at least one first input parameter and based upon the information regarding the virtual networks and the physical network. Moreover, as part of this step, a second embedding problem is formulated based upon the information regarding the virtual networks and the physical network and based upon the at least one second input parameter. The first embedding problem and the second embedding problem are not identical. In a fourth step 103, the first embedding problem is supplied to a first problem solving unit, while the second embedding problem is supplied to a second problem solving unit.

In a fifth step 104, first and second embedding results and according first and second output parameters are received from the first and second problem solving units.

Alternatively, an additional step of calculating the embedding results and output parameters can be inserted between the fourth step and the fifth step. In this case, the problem solving calculations are performed by integer programming or mixed integer programming.

In a sixth step 105, the results of the embedding calculations are stored as past embedding cases. Regarding the parameters stored, it is referred to the elaborations of the second step 101. Furthermore, in a seventh step 106 one of the obtained embedding results is selected as final embedding results and output.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising " does not exclude other elements or steps.

A single processor or other unit may fulfill the functions of several items recited in the claims. The mere fact that certain measures are recited in usually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the internet or other wired or wireless communication systems.

**Claims**

1. Virtual network embedding orchestrator (10) for orchestrating embedding of virtual networks (20, 21, 22, 80, 90) into a physical network (24, 81, 91), comprising

   - a problem formulation unit (11) adapted to:

      - formulate different embedding problems, comprising:

         - formulate a first embedding problem (13a) based upon information regarding the virtual networks (12), information regarding the physical network (12) and at least one first input parameter,
         - formulate a second, different, embedding problem (13b) based upon the information regarding the virtual networks (12), the information regarding the physical network (12) and at least one second input parameter; and

      - submit, in the same step, each embedding problem to a respective problem solving unit, comprising:

         - provide the first embedding problem (13a) to an external first problem solving unit (41a), and
         - provide the second embedding problem to an external second problem solving unit (41b),

   - a solution selection unit (14) adapted to

      - receive first embedding results (16a) and first output parameters (16a) from the first problem solving unit (41a),
      - receive second embedding results (16b) and second output parameters (16b) from the second problem solving unit (41b), and
      - select one of the first embedding results (16a) and the second embedding results (16b) as final embedding results (15) based upon the first output parameters (16a) and the second output parameters (16b).

2. Virtual network embedding orchestrator (10) according to claim 1, comprising a storage unit (18) adapted to receive and store embedding results (17a) and/or output parameters (17a) of the problem solving units (41a, 41b, 41c), and/or according embedding problems (13a, 13b, 13c), and/or according information regarding the virtual networks (12), and/or according information regarding the physical network (12) as past embedding cases, wherein the problem formulation unit (11) is adapted to determine the at least one first input parameter (17b) and the at least one second input parameter (17b) based upon the past embedding cases from the storage unit (18).

3. Virtual network embedding orchestrator (10) according to claim 2, wherein the problem formulation unit (11) is adapted to

   - compare the information regarding the virtual networks (12) and the information regarding the physical network (12) to the past embedding cases from the storage unit (18),
   - determine past embedding cases of identical or near identical information regarding the virtual networks and of identical or near identical information regarding the physical network and of desirable output parameters,
   - formulate the at least one first input parameter and the at least one second input parameter based upon at least one first input parameter (17b) and at least one second input parameter (17b) of the past embedding cases of identical or near identical information regarding the virtual networks (12) and of identical or near identical information regarding the physical network (12).

4. Virtual network embedding orchestrator (10) according to claim 3,
wherein the problem formulation unit (11) is adapted to formulate the at least one first input parameter and the at least one second input parameter by

- interpolating between the first input parameters (17b) and the second input parameters (17b) of at least two past embedding cases of identical or near identical information regarding the virtual networks (12) and of identical of near identical information regarding the physical network (12), or by
- selecting the at least one first input parameter (17b) and the at least one second input parameter (17b) of a single past embedding case of most identical or near identical information regarding the virtual networks (12) and of most identical or near identical information regarding the physical network (12).

5. Virtual network embedding orchestrator (10) according to any of the claims 2 to 4, wherein the output parameters (16a, 16b) of the problem solving units (41a, 41b, 41c) comprise at least one problem solving quality parameter and/or a problem solving time duration parameter.

6. Virtual network embedding orchestrator (10) according to claim 5,
wherein the problem formulation unit (11) is adapted to formulate the at least one first input parameter and the at least one second input parameter by interpolating between the first input parameters (17b) and the second input parameters (17b) of at least two past embedding cases of identical or near identical information regarding the virtual networks (12) and of identical or near identical information regarding the physical network (12) and of desirable output parameters or,
by selecting the at least one first input parameter (17b) and the at least one second input parameter (17b) of a single past embedding case of most identical or near identical information regarding the virtual networks (12) and of most identical or near identical information regarding the physical network (12) and of most desirable output parameters, wherein desirable output parameters comprise a problem solving quality parameter above a quality threshold and/or a problem solving time duration parameter below a time duration threshold.

7. Virtual network embedding orchestrator (10) according to claim 6,
wherein the at least one problem solving quality parameter comprises an average number of links of the physical network (24, 81, 91) used for the links of the virtual networks (20, 21, 22, 80, 90), and/or a fraction of utilization of the links and nodes of the physical network (24, 81, 91), and/or an amount of virtual networks (20, 21, 22, 80, 90) embedded into the physical network (24, 81, 91).

8. Virtual network embedding orchestrator (10) according to any of the claims 1 to 7, wherein the information regarding the physical network (12) comprises information regarding physical nodes and physical links connecting the nodes, and/or
wherein the information regarding the virtual networks (12) each comprises information regarding at least one virtual link connecting at least two virtual nodes, and/or
wherein the first embedding results (16a), the second embedding results (16b) and the final embedding results (15) comprise a mapping of the physical links of the physical network (24, 81, 91) to the virtual links of the virtual networks (20, 21, 22, 80, 90), and/or a mapping of the physical nodes of the physical network (24, 81, 91) to the virtual nodes of the virtual networks (20, 21, 22, 80, 90).

9. Virtual network embedding orchestrator (10) according to any of the claims 1 to 8, wherein the at least one first input parameter and the at least one second input parameter of the problem formulation unit (11) comprise amounts of virtual networks (20, 21, 22, 80, 90) for which the embedding into the physical network (24, 81, 91) is to be calculated simultaneously.

10. Virtual network embedding orchestrator (10) according to any of the claims 1 to 9, wherein the at least one first input parameter and the at least one second input parameter of the problem formulation unit (11) comprises a weighting parameter for weighting costs against benefits of a solution of the problem solving by the problem solving unit.

11. Virtual network embedding orchestrator (10) according to any of the claims 1 to 10, further comprising an input buffer adapted to successively receive and store the information regarding the virtual networks (12), and

wherein the problem formulation unit (11) is adapted to formulate the embedding problems based upon information regarding the virtual networks (12) stored in the input buffer.

12. Virtual network embedding system (40) comprising a virtual network embedding orchestrator (10) according to any of the claims 1 to 11 and at least a first problem solving unit (41a) and a second problem solving unit (41b), and wherein the problem formulation unit (11) of the virtual network embedding orchestrator is adapted to

- provide the first embedding problem (13a) to the first problem solving unit (41a), and
- provide the second embedding problem (13b) to the second problem solving unit (41b).

13. Virtual network embedding system (40) according to claim 12,
wherein the problem solving units (41a, 41b, 41c) are adapted to determine the solutions to the embedding problems (13a, 13b, 13c) by integer programming or mixed integer programming.

14. Method for orchestrating embedding of virtual networks (20, 21, 22, 80, 90) into a physical network (24, 81, 91), comprising the following steps:

- formulating a first embedding problem (13a) based upon information regarding the virtual networks (12), information regarding the physical network (12) and at least one first input parameter (17b) (102),
- formulating a second embedding problem based upon the information regarding the virtual networks (12), the information regarding the physical network (12) and at least one second input parameter (17b) (102); wherein the first and second embedding problems are different,
- providing, comprising:

  - providing the first embedding problem (13a) to a first problem solving unit (41a) (103), and in the same step
  - providing the second embedding problem to a second problem solving unit (41b) (103);

- receiving first embedding results (16a) and first output parameters (16a) from the first problem solving unit (41a) (104),
- receiving second embedding results (16b) and second output parameters (16b) from the second problem solving unit (41b) (104), and
- selecting one of the first embedding results (16a) and the second embedding results (16b) as final embedding results (15) based upon the first output parameters (16a) and the second output parameters (16b) (106).

15. A computer program with a program code for performing the method according to claim 14 when the computer program runs on a computer.

**Patentansprüche**

1. Virtuelle Netzwerke einbettender Orchestrator (10) zum Orchestrieren des Einbettens virtueller Netzwerke (20, 21, 22, 80, 90) in ein physisches Netzwerk (24, 81, 91), umfassend

- eine Problemformulierungseinheit (11), eingerichtet zum

  - Formulieren unterschiedlicher Einbettungsprobleme, umfassend:

    - Formulieren eines ersten Einbettungsproblems (13a), basierend auf Information betreffend die virtuellen Netzwerke (12), Information betreffend das physische Netzwerk (12) und mindestens einem ersten Eingabeparameter,
    - Formulieren eines zweiten, unterschiedlichen Einbettungsproblems (13b), basierend auf der Information betreffend die virtuellen Netzwerke (12), der Information betreffend das physische Netzwerk (12) und mindestens einem zweiten Eingabeparameter; und
    - Vorlegen jedes Einbettungsproblems im gleichen Schritt bei einer entsprechenden Problemlösungseinheit, umfassend:
    - Bereitstellen des ersten Einbettungsproblems (13a) bei einer externen ersten Problemlösungseinheit (41a), und

- Bereitstellen des zweiten Einbettungsproblems bei einer externen zweiten Problemlösungseinheit (41b),
- eine Lösungsauswahleinheit (14), eingerichtet zum

- Empfangen erster Einbettungsresultate (16a) und erster Ausgabeparameter (16a) von der ersten Problemlösungseinheit (41a),
- Empfangen zweiter Einbettungsresultate (16b) und zweiter Ausgabeparameter (16b) von der zweiten Problemlösungseinheit (41b), und
- Auswählen von einem der ersten Einbettungsresultate (16a) und der zweiten Einbettungsresultate (16b) als finalem Einbettungsresultat (15), basierend auf den ersten Ausgabeparametern (16a) und den zweiten Ausgabeparametern (16b).

2. Virtuelle Netzwerke einbettender Orchestrator (10) nach Anspruch 1, umfassend eine Speichereinheit (18), eingerichtet zum Empfangen und Speichern von Einbettungsresultaten (17a) und/oder Ausgabeparametern (17a) der Problemlösungseinheiten (41a, 41b, 41c) und/oder entsprechender Einbettungsprobleme (13a, 13b, 13c) und/oder entsprechender Information betreffend die virtuellen Netzwerke (12) und/oder entsprechender Information betreffend das physische Netzwerk (12) als zurückliegenden Einbettungsfällen,
wobei die Problemlösungseinheit (11) eingerichtet ist zum Festlegen des mindestens einen ersten Eingabeparameters (17b) und des mindestens einen zweiten Eingabeparameters (17b), basierend auf den zurückliegenden Einbettungsfällen aus der Speichereinheit (18).

3. Virtuelle Netzwerke einbettender Orchestrator (10) nach Anspruch 2,
wobei die Problemlösungseinheit (11) eingerichtet ist zum

- Vergleichen der Information betreffend die virtuellen Netzwerke (12) und der Information betreffend das physische Netzwerk (12) mit den zurückliegenden Einbettungsfällen aus der Speichereinheit (18),
- Ermitteln zurückliegender Einbettungsfälle identischer oder nahezu identischer Information betreffend die virtuellen Netzwerke und identischer oder nahezu identischer Information betreffend das physische Netzwerk und von wünschenswerten Ausgabeparametern,
- Formulieren des mindestens einen ersten Eingabeparameters und des mindestens einen zweiten Eingabeparameters basierend auf mindestens einem ersten Eingabeparameter (17b) und mindestens einem zweiten Eingabeparameter (17b) der zurückliegenden Einbettungsfälle identischer oder nahezu identischer Information betreffend die virtuellen Netzwerke (12) und identischer oder nahezu identischer Information betreffend das physische Netzwerk (12).

4. Virtuelle Netzwerke einbettender Orchestrator (10) nach Anspruch 3,
wobei die Problemlösungseinheit (11) eingerichtet ist zum Formulieren des mindestens einen ersten Eingabeparameters und des mindestens einen zweiten Eingabeparameters durch

- Interpolieren zwischen den ersten Eingabeparametern (17b) und den zweiten Eingabeparametern (17b) von mindestens zwei zurückliegenden Einbettungsfällen identischer oder nahezu identischer Information betreffend die virtuellen Netzwerke (12) und identischer oder nahezu identischer Information betreffend das physische Netzwerk (12), oder durch
- Auswählen des mindestens einen ersten Eingabeparameters (17b) und des mindestens einen zweiten Eingabeparameters (17b) eines einzelnen zurückliegenden Einbettungsfalls mit der meisten identischen oder nahezu identischen Information betreffend die virtuellen Netzwerke (12) und der meisten identischen oder nahezu identischen Information betreffend das physische Netzwerk (12).

5. Virtuelle Netzwerke einbettender Orchestrator (10) nach einem der Ansprüche 2 bis 4, wobei die Ausgabeparameter (16a, 16b) der Problemlösungseinheiten (41a, 41b, 41c) mindestens einen problemlösenden Qualitätsparameter und/oder einen problemlösenden Zeitdauerparameter umfassen.

6. Virtuelle Netzwerke einbettender Orchestrator (10) nach Anspruch 5,
wobei die Problemlösungseinheit (11) eingerichtet ist zum Formulieren des mindestens einen ersten Eingabeparameters und mindestens einen zweiten Eingabeparameters durch Interpolieren zwischen den ersten Eingabeparametern (17b) und den zweiten Eingabeparametern (17b) von mindestens zwei zurückliegenden Einbettungsfällen identischer oder nahezu identischer Information betreffend die virtuellen Netzwerke (12) und identischer oder nahezu identischer Information betreffend das physische Netzwerk (12) und mit wünschenswerten Ausgabeparametern, oder

durch Auswählen des mindestens einen ersten Eingabeparameters (17b) und des mindestens einen zweiten Eingabeparameters (17b) eines einzelnen zurückliegenden Einbettungsfalls mit der meisten identischen oder nahezu identischen Information betreffend die virtuellen Netzwerke (12) und der meisten identischen oder nahezu identischen Information betreffend das physische Netzwerk (12) und den meisten wünschenswerten Ausgabeparametern, wobei wünschenswerte Ausgabeparameter einen problemlösenden Qualitätsparameter oberhalb eines Qualitätsschwellenwerts und/oder einen problemlösenden Zeitdauerparameter unterhalb eines Zeitdauerschwellenwerts umfassen.

7. Virtuelle Netzwerke einbettender Orchestrator (10) nach Anspruch 6,
wobei der mindestens eine problemlösende Qualitätsparameter eine durchschnittliche Anzahl von für die Links der virtuellen Netzwerke (20, 21, 22, 80, 90) verwendeten Links des physischen Netzwerks (24, 81,91) und/oder einen Nutzungsanteil der Links und Knoten des physischen Netzwerks (24, 81, 91) und/oder einen Umfang in das physische Netzwerk (24, 81, 91) eingebetteter virtueller Netzwerke (20, 21, 22, 80, 90) umfasst.

8. Virtuelle Netzwerke einbettender Orchestrator (10) nach einem der Ansprüche 1 bis 7, wobei die Information betreffend das physische Netzwerk (12) Information betreffend physische Knoten und die Knoten verbindende physische Links umfasst und/oder wobei die Information betreffend die virtuellen Netzwerke (12) jeweils Information betreffend mindestens einen mindestens zwei virtuelle Knoten verbindenden virtuellen Link umfasst und/oder wobei die ersten Einbettungsresultate (16a), die zweiten Einbettungsresultate (16b) und die finalen Einbettungsresultate (15) eine Abbildung der physischen Links des physischen Netzwerks (24, 81, 91) auf die virtuellen Links der virtuellen Netzwerke (20, 21, 22, 80, 90) und/oder eine Abbildung der physischen Knoten des physischen Netzwerks (24, 81, 91) auf die virtuellen Knoten der virtuellen Netzwerke (20, 21, 22, 80, 90) umfassen.

9. Virtuelle Netzwerke einbettender Orchestrator (10) nach einem der Ansprüche 1 bis 8, wobei der mindestens eine erste Eingabeparameter und der mindestens eine zweite Eingabeparameter der Problemformulierungseinheit (11) Umfänge virtueller Netzwerke (20, 21, 22, 80, 90) umfassen, für die das Einbetten in das physische Netzwerk (24, 81, 91) gleichzeitig berechnet werden soll.

10. Virtuelle Netzwerke einbettender Orchestrator (10) nach einem der Ansprüche 1 bis 9, wobei der mindestens eine erste Eingabeparameter und der mindestens eine zweite Eingabeparameter der Problemformulierungseinheit (11) einen Gewichtungsparameter für das Abwägen von Kosten gegenüber Nutzen einer Lösung der Problemlösung durch die Problemlösungseinheit umfassen.

11. Virtuelle Netzwerke einbettender Orchestrator (10) nach einem der Ansprüche 1 bis 10, ferner umfassend einen Eingangspuffer, eingerichtet zum nachfolgenden Empfangen und Speichern der Information betreffend die virtuellen Netzwerke (12), und
wobei die Problemlösungseinheit (11) eingerichtet ist zum Formulieren der Einbettungsprobleme basierend auf Information betreffend die im Eingangspuffer gespeicherten virtuellen Netzwerke (12).

12. Einbettungssystem (40) für virtuelle Netzwerke, umfassend einen virtuelle Netzwerke einbettenden Orchestrator (10) nach einem der Ansprüche 1 bis 11 und mindestens eine erste Problemlösungseinheit (41a) und eine zweite Problemlösungseinheit (41b), und
wobei die Problemlösungseinheit (11) des virtuelle Netzwerke einbettenden Orchestrators eingerichtet ist zum

- Bereitstellen des ersten Einbettungsproblems (13a) zur ersten Problemlösungseinheit (41a), und
- Bereitstellen des zweiten Einbettungsproblems (13b) zur zweiten Problemlösungseinheit (41b).

13. Virtuelle Netzwerke einbettendes System (40) nach Anspruch 12,
wobei die Problemlösungseinheiten (41a, 41b, 41c) eingerichtet sind zum Festlegen der Lösungen für die Einbettungsprobleme (13a, 13b, 13c) durch ganzzahlige Programmierung oder gemischt-ganzzahlige Programmierung.

14. Verfahren zum Orchestrieren des Einbettens von virtuellen Netzwerken (20, 21, 22, 80, 90) in ein physisches Netzwerk (24, 81, 91), umfassend die folgenden Schritte:

- Formulieren eines ersten Einbettungsproblems (13a), basierend auf Information betreffend die virtuellen Netzwerke (12), Information betreffend das physische Netzwerk (12) und mindestens einem ersten Eingabeparameter (17b)(102),

- Formulieren eines zweiten Einbettungsproblems, basierend auf der Information betreffend die virtuellen Netzwerke (12), der Information betreffend das physische Netzwerk (12) und mindestens einem zweiten Eingabeparameter (17b)(102); wobei das erste und zweite Einbettungsproblem unterschiedlich sind,
- Bereitstellung, umfassend:

  - Bereitstellen des ersten Einbettungsproblems (13a) bei einer ersten Problemlösungseinheit (41a)(103), und
  im gleichen Schritt
  - Bereitstellen des zweiten Einbettungsproblems bei einer zweiten Problemlösungseinheit (41b)(103),
  - Empfangen erster Einbettungsresultate (16a) und erster Ausgabeparameter (16a) von der ersten Problemlösungseinheit (41a)(104),
  - Empfangen zweiter Einbettungsresultate (16b) und zweiter Ausgabeparameter (16b) von der zweiten Problemlösungseinheit (41b)(104), und
  - Auswählen von einem der ersten Einbettungsresultate (16a) und der zweiten Einbettungsresultate (16b) als finalem Einbettungsresultat (15), basierend auf den ersten Ausgabeparametern (16a) und den zweiten Ausgabeparametern (16b)(106).

**15.** Rechnerprogramm mit einem Programmcode zum Durchführen des Verfahrens nach Anspruch 14 bei Ausführung des Rechnerprogramms auf einem Rechner.

## Revendications

**1.** Orchestrateur d'incorporation de réseaux virtuels (10) pour orchestrer l'incorporation de réseaux virtuels (20, 21, 22, 80, 90) dans un réseau physique (24, 81, 91), comprenant

  - une unité de formulation de problèmes (11) adaptée pour :
  - formuler différents problèmes d'incorporation, comprenant :
  - formuler un premier problème d'incorporation (13a) sur la base d'informations concernant les réseaux virtuels (12), d'informations concernant le réseau physique (12) et d'au moins un premier paramètre d'entrée,
  - formuler un second problème d'incorporation différent (13b) sur la base des informations concernant les réseaux virtuels (12), des informations concernant le réseau physique (12) et d'au moins un second paramètre d'entrée ; et
  - soumettre, dans la même étape, chaque problème d'incorporation à une unité de résolution de problème respective, comprenant :
  - fournir le premier problème d'incorporation (13a) à une première unité de résolution de problème externe (41a), et
  - fournir le second problème d'incorporation à une seconde unité de résolution de problème externe (41b),
  - une unité de sélection de solution (14) adaptée pour
  - recevoir des premiers résultats d'incorporation (16a) et des premiers paramètres de sortie (16a) à partir de la première unité de résolution de problème (41a),
  - recevoir des seconds résultats d'incorporation (16b) et des seconds paramètres de sortie (16b) à partir de la seconde unité de résolution de problème (41b), et
  - sélectionner un des premiers résultats d'incorporation (16a) et des seconds résultats d'incorporation (16b) en tant que résultats d'incorporation finaux (15) sur la base des premiers paramètres de sortie (16a) et des seconds paramètres de sortie (16b).

**2.** Orchestrateur d'incorporation de réseaux virtuels (10) selon la revendication 1, comprenant une unité de stockage (18) adaptée pour recevoir et stocker des résultats d'incorporation (17a) et/ou des paramètres de sortie (17a) des unités de résolution de problèmes (41a, 41b, 41c), et/ou des problèmes d'incorporation concordants (13a, 13b, 13c), et/ou des informations concordantes concernant les réseaux virtuels (12), et/ou des informations concordantes concernant le réseau physique (12) en tant que cas d'incorporation passés, dans lequel l'unité de formulation de problèmes (11) est adaptée pour déterminer l'au moins un premier paramètre d'entrée (17b) et l'au moins un second paramètre d'entrée (17b) sur la base des cas d'incorporation passés provenant de l'unité de stockage (18).

**3.** Orchestrateur d'incorporation de réseaux virtuels (10) selon la revendication 2, dans lequel l'unité de formulation de problèmes (11) est adaptée pour

- comparer les informations concernant les réseaux virtuels (12) et les informations concernant le réseau physique (12) aux cas d'incorporation passés provenant de l'unité de stockage (18),
- déterminer des cas d'incorporation passés d'informations identiques ou quasi-identiques concernant les réseaux virtuels et d'informations identiques ou quasi-identiques concernant le réseau physique et de paramètres de sortie souhaitables,
- formuler l'au moins un premier paramètre d'entrée et l'au moins un second paramètre d'entrée sur la base d'au moins un premier paramètre d'entrée (17b) et d'au moins un second paramètre d'entrée (17b) des cas d'incorporation passés d'informations identiques ou quasi-identiques concernant les réseaux virtuels (12) et d'informations identiques ou quasi-identiques concernant le réseau physique (12).

4. Orchestrateur d'incorporation de réseaux virtuels (10) selon la revendication 3, dans lequel l'unité de formulation de problèmes (11) est adaptée pour formuler l'au moins un premier paramètre d'entrée et l'au moins un second paramètre d'entrée en

   - interpolant entre le premier paramètre d'entrées (17b) et le second paramètre d'entrées (17b) d'au moins deux cas d'incorporation passés d'informations identiques ou quasi-identiques concernant les réseaux virtuels (12) et d'informations identiques ou quasi-identiques concernant le réseau physique (12), ou en
   - sélectionnant l'au moins un premier paramètre d'entrée (17b) et l'au moins un second paramètre d'entrée (17b) d'un cas d'incorporation passé unique d'informations les plus identiques ou quasi-identiques concernant les réseaux virtuels (12) et d'informations les plus identiques ou quasi-identiques concernant le réseau physique (12).

5. Orchestrateur d'incorporation de réseaux virtuels (10) selon l'une quelconque des revendications 2 à 4, dans lequel les paramètres de sortie (16a, 16b) des unités de résolution de problèmes (41a, 41b, 41c) comprennent au moins un paramètre de qualité de résolution de problème et/ou un paramètre de durée de résolution de problème.

6. Orchestrateur d'incorporation de réseaux virtuels (10) selon la revendication 5,
dans lequel l'unité de formulation de problèmes (11) est adaptée pour formuler l'au moins un premier paramètre d'entrée et l'au moins un second paramètre d'entrée en interpolant entre le premier paramètre d'entrées (17b) et le second paramètre d'entrées (17b) d'au moins deux cas d'incorporation passés d'informations identiques ou quasi-identiques concernant les réseaux virtuels (12) et d'informations identiques ou quasi-identiques concernant le réseau physique (12) et de paramètres de sortie souhaitables ou,
en sélectionnant l'au moins un premier paramètre d'entrée (17b) et l'au moins un second paramètre d'entrée (17b) d'un cas d'incorporation passé unique d'informations les plus identiques ou quasi-identiques concernant les réseaux virtuels (12) et d'informations les plus identiques ou quasi-identiques concernant le réseau physique (12) et de paramètres de sortie les plus souhaitables,
dans lequel des paramètres de sortie souhaitables comprennent un paramètre de qualité de résolution de problème supérieur à un seuil de qualité et/ou un paramètre de durée de résolution de problème inférieur à un seuil de durée.

7. Orchestrateur d'incorporation de réseaux virtuels (10) selon la revendication 6, dans lequel l'au moins un paramètre de qualité de résolution de problème comprend un nombre moyen de liaisons du réseau physique (24, 81, 91) utilisées pour les liaisons des réseaux virtuels (20, 21, 22, 80, 90), et/ou une fraction d'utilisation des liaisons et noeuds du réseau physique (24, 81, 91), et/ou une quantité de réseaux virtuels (20, 21, 22, 80, 90) incorporés dans le réseau physique (24, 81, 91).

8. Orchestrateur d'incorporation de réseaux virtuels (10) selon l'une quelconque des revendications 1 à 7,
dans lequel les informations concernant le réseau physique (12) comprennent des informations concernant des noeuds physiques et des liaisons physiques connectant les noeuds, et/ou
dans lequel les informations concernant les réseaux virtuels (12) comprennent chacune des informations concernant au moins une liaison virtuelle connectant au moins deux noeuds virtuels, et/ou
dans lequel les premiers résultats d'incorporation (16a), les seconds résultats d'incorporation (16b) et les résultats d'incorporation finaux (15) comprennent une mise en correspondance des liaisons physiques du réseau physique (24, 81, 91) sur les liaisons virtuelles des réseaux virtuels (20, 21, 22, 80, 90), et/ou une mise en correspondance des noeuds physiques du réseau physique (24, 81, 91) sur les noeuds virtuels des réseaux virtuels (20, 21, 22, 80, 90).

9. Orchestrateur d'incorporation de réseaux virtuels (10) selon l'une quelconque des revendications 1 à 8,
dans lequel l'au moins un premier paramètre d'entrée et l'au moins un second paramètre d'entrée de l'unité de formulation de problèmes (11) comprennent des quantités de réseaux virtuels (20, 21, 22, 80, 90) pour lesquels l'incorporation dans le réseau physique (24, 81, 91) doit être calculée simultanément.

10. Orchestrateur d'incorporation de réseaux virtuels (10) selon l'une quelconque des revendications 1 à 9, dans lequel l'au moins un premier paramètre d'entrée et l'au moins un second paramètre d'entrée de l'unité de formulation de problèmes (11) comprend un paramètre de pondération pour pondérer des coûts par rapport à des avantages d'une solution de la résolution de problème par l'unité de résolution de problème.

11. Orchestrateur d'incorporation de réseaux virtuels (10) selon l'une quelconque des revendications 1 à 10, comprenant en outre une mémoire tampon d'entrée adaptée pour successivement recevoir et stocker les informations concernant les réseaux virtuels (12), et dans lequel l'unité de formulation de problèmes (11) est adaptée pour formuler les problèmes d'incorporation sur la base d'informations concernant les réseaux virtuels (12) stockées dans la mémoire tampon d'entrée.

12. Système d'incorporation de réseaux virtuels (40), comprenant un orchestrateur d'incorporation de réseaux virtuels (10) selon l'une quelconque des revendications 1 à 11 et au moins une première unité de résolution de problème (41a) et une seconde unité de résolution de problème (41b), et dans lequel l'unité de formulation de problèmes (11) de l'orchestrateur d'incorporation de réseaux virtuels est adaptée pour

   - fournir le premier problème d'incorporation (13a) à la première unité de résolution de problème (41a), et
   - fournir le second problème d'incorporation (13b) à la seconde unité de résolution de problème (41b).

13. Système d'incorporation de réseaux virtuels (40) selon la revendication 12, dans lequel les unités de résolution de problèmes (41a, 41b, 41c) sont adaptées pour déterminer les solutions aux problèmes d'incorporation (13a, 13b, 13c) par programmation en nombres entiers ou programmation mixte en nombres entiers.

14. Procédé pour orchestrer l'incorporation de réseaux virtuels (20, 21, 22, 80, 90) dans un réseau physique (24, 81, 91), comprenant les étapes suivantes :

   - la formulation d'un premier problème d'incorporation (13a) sur la base d'informations concernant les réseaux virtuels (12), d'informations concernant le réseau physique (12) et d'au moins un premier paramètre d'entrée (17b) (102),
   - la formulation d'un second problème d'incorporation sur la base des informations concernant les réseaux virtuels (12), des informations concernant le réseau physique (12) et d'au moins un second paramètre d'entrée (17b) (102) ; dans lequel les premier et second problèmes d'incorporations sont différents,
   - la fourniture comprenant :
   - la fourniture du premier problème d'incorporation (13a) à une première unité de résolution de problème (41a) (103), et

   dans la même étape

   - la fourniture du second problème d'incorporation à une seconde unité de résolution de problème (41b) (103) ;
   - la réception de premiers résultats d'incorporation (16a) et de premiers paramètres de sortie (16a) à partir de la première unité de résolution de problème (41a) (104),
   - la réception de seconds résultats d'incorporation (16b) et de seconds paramètres de sortie (16b) à partir de la seconde unité de résolution de problème (41b) (104), et
   - la sélection d'un des premiers résultats d'incorporation (16a) et des seconds résultats d'incorporation (16b) en tant que résultats d'incorporation finaux (15) sur la base des premiers paramètres de sortie (16a) et des seconds paramètres de sortie (16b) (106).

15. Programme d'ordinateur avec un code de programme pour réaliser le procédé selon la revendication 14 lorsque le programme d'ordinateur est exécuté sur un ordinateur.

Fig. 1

**Fig. 2**

**Fig. 3**

**Fig. 4**

**Fig. 5**

Fig. 6

40

13a

Input structure 1: G=1

VN #20 ...... VN #2 VN #1

41a

Solver 1
Configuration 1

11    13b

12

VN #20 ...... VN #2 VN #1

Q=20

Problem
formulation
unit

Input structure 2: G=5

Group #4        Group #1

41b    14    15

Solver 2
Configuration 2

Solution
selector

Input structure 3: G=20

41c

Solver 3
Configuration 3

13c

17b

17a

DB

18

Fig. 7

Virtual network                    Physical network

# Fig. 8

$$y_{hg}^1 = 1$$

Embedding solution

$$v_{hg} \rightarrow n_1$$
$$v_{h'g} \rightarrow n_4$$
$$e_{kg} \rightarrow \{l_{12}, n_2, l_{23}, n_3, l_{34}\}$$

$$x_{12}^{kg} = 1$$

$$x_{23}^{kg} = 1$$

$$x_{34}^{kg} = 1$$

$$y_{h'g}^1 = 1$$

# Fig. 9

Fig. 10

Provide information regarding virtual networks and a physical network — 100

Derive at least one first input parameter and at least one second input parameter from past embedding cased stored in a database — 101

Formulate a first embedding problem based upon the information regarding the virtual networks and the physical network and based upon the at least one first input parameter;
Formulate a second embedding problem based upon the information regarding the virtual networks and the physical network and based upon the at least one second input parameter — 102

Provide the first embedding problem to a first problem solving unit;
Provide the second embedding problem to a second problem solving unit — 103

Receive first and second embedding results and first and second output paramerts — 104

The embedding results and/or output parameters of the problem solving units, and/or according embedding problems, and/or according information regarding the virtual networks, and/or according information regarding the physical network as past embedding cases in the database — 105

Select one of the first and second embedding results as final embedding results and output final embedding results — 106

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A novel approach to virtual networks embedding for SDN management and orchestration. **GUERZONI R et al.** 2014 IEEE NETWORK OPERATIONS AND MANAGEMENT SYMPOSIUM(NOMS). IEEE, 05 May 2014, 1-7
- **LIN XU et al.** Hydra-MIP: Automated Algorithm Configuration and Selection for Mixed Integer Programming. *Proceedings of the 18th RCRA workshop on Experimental Evaluation of Algorithms for Solving Problems with Combinatorial Explosion,* 17 July 2011
- **LIHAO XU et al.** Hydra: Automatically Configuring Algorithms for Portfolio-Based Selection. *PROCEEDINGS OF THE 24TH AAAI CONFERENCE ON ARTIFICIAL INTELLIGENCE,* 11 July 2010
- **LIN XU et al.** SATzilla: Portfolio-based Algorithm Selection for SAT. *JOURNAL OF ARTIFICIAL INTELLIGENCE RESEARCH,* 01 May 2008, vol. 32 (1
- **LIN XU et al.** *Hydra-MIP: Automated Algorithm Configuration and Selection for Mixed Integer Programming,* 04 October 2011